# EUROPEAN PATENT APPLICATION

(11) **EP 3 163 871 A1**
(43) Date of publication of application: **03.05.2017**
(21) Application number: 15812258.0
(22) Date of filing: 29.05.2015
(51) Int. Cl.: H04N 7/18

(54) **LIGHTING DEVICE CONTROLLED BY IMAGE RECOGNITION SYSTEM**

(30) Priority: 24.06.2014 CN 201410289447
(71) Applicant: Chen, Kaipo, Taoyuan Hsien 32571 (TW)
(72) Inventor: Chen, Kaipo, Taoyuan Hsien 32571 (TW)
(74) Representative: Horak, Michael
(86) International application number: PCT/CN2015/080332
(87) International publication number: WO 2015/196895

(57) **Abstract**

A lighting device controlled by an image recognition system is disclosed in the present invention. The lighting device includes an image device (1) with an image module (11) inside, wherein the image module (11) can be used to capture an image; an image recognition device (12) determines the captured image and sends a signal to a CPU microprocessor (113); a lighting module (111) and a storage module (114) connected with the CPU microprocessor (113) are started simultaneously to perform lighting and video storage according to the signal transmitted by the CPU microprocessor (113); and image determination is performed under more limited conditions by using an image database (12) and a comparison module (121) so that the aim of accurate determination can be achieved. The image device (1) also includes additional function modules (13) connected with the CPU microprocessor (113) such as a sound effect module (131), a wireless module (132), and a WIFI module (133) etc., therefore the start function of the CPU microprocessor (113) can be enhanced, flexible video storage space can be provided by the present invention, and the accuracy of image comparison can be improved.

## Description

### BACKGROUND OF THE INVENTION

### (a) Technical Field of the Invention

The present invention generally relates to an image recognition system, and more particularly to an image recognition system that recognizes an object entering a detection range so as to control a lighting device to perform a related operation.

### (b) Description of the Prior Art

A conventional surveillance security system has a major advantage of using a centralized control center to carry out surveillance operations or being in connection with a police station for the simple purposes of preventing burglary invasion and thus avoiding damage of property. However, the conventional system uses cameras that are installed at easily-observable sites and may be slightly bulky in size. On the other hand, a surveillance device that is combined with sensing-based lighting is also available for the purposes of sensing an object entering a detection range to activate lighting for alarming reminder and also to activate video storage operations of the surveillance device. For whatever types of the known surveillances used, if the number of the surveillances installed in not enough, burglary can finds a way to avoid the range where recording of image may be available, making the installation of the conventional surveillance security system total in vein.

With the progress of technology and science, the image capturing devices that are currently available in the market are generally achieved by installing miniature cameras. Due to being small in size and being wide in applications, they are commonly used for to carry out photographing in a concealed location for evidence collection, surveillance, and search for law upholding. However, they suffer certain drawbacks for they need to be operated by being manually controlled through control buttons. Some manufacturers proposed to combine such cameras or image devices with lighting devices. However, the proposed solution is always put into operation when power is turned on to make lighting and also to capture and store video images. Such an operation may be prolonged for an extended period of time so that the device may run out of storage capacity thereof or the image quality of recording must be downgraded. All these problems and shortcomings require further improvements.

### SUMMARY OF THE INVENTION

An objective of the present invention is to provide a lighting device controlled by an image recognition system in order to make imaging of a surveillance range convenient and also to eliminate waste of storage space with an effect of ensuring the quality of stored images.

To achieve the above objective, the present invention provides the following technical solution:
A lighting device controlled by an image recognition system controlled lighting device is characterized by comprising: an image device, which comprises therein an image module, which acquires an image; an image recognition device, which recognizes the image acquired by the image module to transmit a signal to a CPU microprocessor, so that the CPU microprocessor simultaneously activates a lighting module and a storage module connected thereto to carry out operations of lighting and video storage.

A lighting device controlled by an image recognition system comprises an image device, which comprises therein an image module, an image recognition device, and a CPU microprocessor, wherein the image module captures an image to be transmitted to the image recognition device for recognition therein and subsequent issuance of a message to the CPU microprocessor, so as to simultaneously an lighting module and a storage module connected to the CPU microprocessor to perform functions of lighting and video storage. Additionally, an additional function module is connected with the CPU microprocessor for providing and activating additional functions that are desired.

Preferably, the additional function module comprises: a sound effect module, which supplies a warning sound, a wireless module, which transmits a reminder, and a WIFI module, which transmits a stored image, each of the modules being connected to and driven by the CPU microprocessor, the WIFI module being connected to the storage module for the storage module to store of recorded images.

A lighting device controlled by an image recognition system comprises: an image device, which comprises therein an image module, which acquires an image; an image recognition device, which recognizes the image acquired by the image module to transmit a signal to a CPU microprocessor, so that the CPU microprocessor simultaneously activates a lighting module and a storage module connected thereto to carry out operations of lighting and video storage, the CPU microprocessor being connected to an additional function module, wherein the additional function module further comprises: a sound effect module, which supplies a warning sound, a wireless module, which transmits a reminder, and a WIFI module, which transmits a stored image, each of the modules being connected to and driven by the CPU microprocessor, the WIFI module being connected to the storage module for the storage module to store of recorded images; an image database, which is loaded therein at least one image and in connected with the CPU microprocessor for transmission of the captured image to a comparison module for comparison, the comparison module being further connected with the storage module in order to control an operation condition of image recoding of the storage module.

Preferably, the lighting device controlled by the image recognition system comprises: a rotatable seat, the rotatable seat being arranged outside the image module, the rotatable seat being fixed or adjustable to improve fixation of the image module or to adjust the rotatable seat to change a viewing range of the image module in order to capture different images.

Compared to the drawbacks of the prior art, the present invention uses an image module to capture an image, which is applied to an image recognition device for determining if a moving object image is identified in a range of sensing so as to operate in combination with a CPU microprocessor to issue a signal for activation of a lighting module and a storage module to perform operations of lighting and video storage and an image database and a comparison module for comparison thereby improving a meaningless waste of recorded image storage space found in the prior art and allowing for an effective use of the recorded image storage space for storage of images of value of use.

### BRIEF DESCRIPTION OF THE DRAWINGS

For better understanding of the technical solution that the present invention adopts to achieve the above objectives and features, explanation will be given to preferred embodiments with reference to the attached drawings.
FIG 1 is a flow chart of a first embodiment of a lighting device controlled by an image recognition system according to an embodiment of the present invention.
FIG 2 is a system block diagram of the first embodiment of the lighting device controlled by the image recognition system according to the embodiment of the present invention.
FIG 3 is a flow chart of a second embodiment of a lighting device controlled by an image recognition system according to an embodiment of the present invention.
FIG 4 is a system block diagram of the second embodiment of the lighting device controlled by the image recognition system according to the embodiment of the present invention.
FIG 5 is a schematic view showing a first application of the lighting device controlled by the image recognition system according to the embodiment of the present invention.
FIG 6 is a schematic view showing a second application of the lighting device controlled by the image recognition system according to the embodiment of the present invention.
FIG 7 is a schematic view showing a third application of the lighting device controlled by the image recognition system according to the embodiment of the present invention.
FIG 8 is a schematic view showing a fourth application of the lighting device controlled by the image recognition system according to the embodiment of the present invention.
FIG 9 is a schematic view showing a fifth application of the lighting device controlled by the image recognition system according to the embodiment of the present invention.
FIG 10 is a schematic view showing a sixth application of the lighting device controlled by the image recognition system according to the embodiment of the present invention.
FIG 11 is a schematic view showing a seventh application of the lighting device controlled by the image recognition system according to the embodiment of the present invention.
FIG 12 is a schematic view showing an eighth application of the lighting device controlled by the image recognition system according to the embodiment of the present invention.

### DETAILED DESCRIPTION OF THE PREFERRED EMBODIMENTS

Better understanding of the present invention can be available with a detailed description given to a preferred practicable embodiment of the present invention, with reference to the drawings.

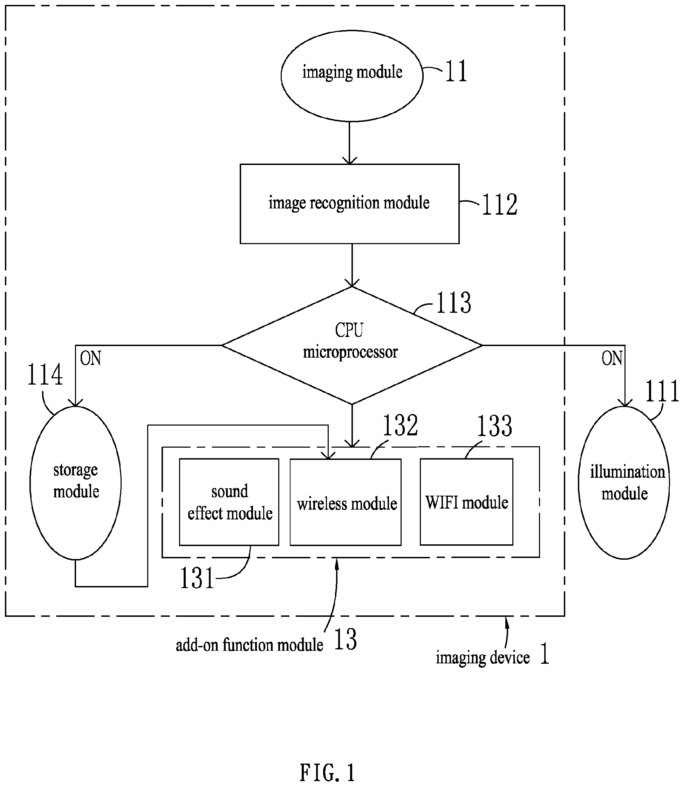

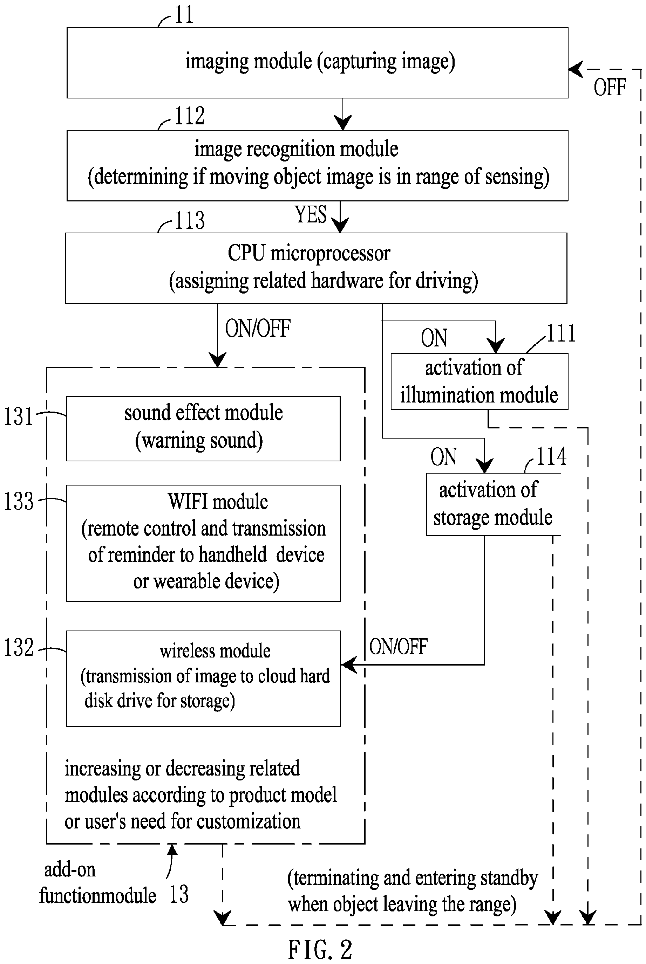

Referring to FIGS. 1 and 2, which show a first embodiment of the present invention, the present invention provides a lighting device controlled by an image recognition system, comprising: an image device 1 that comprises therein an image module 11, which captures and acquires an image, wherein the image module 11 can be a camera lens; and an image recognition device 112, which determines if the image 14 acquired by the image module 11 is a moving object image and does not transmit any signal if it is not and transmits a signal to a CPU microprocessor 113 if it is a moving object image so that the CPU microprocessor 113, upon receipt of the signal, activates simultaneously a lighting module 111 and a storage module 114 electrically connected thereto, wherein the lighting module 111 can be a light-emitting diode and the storage module 114 can be a read-only memory or a flash memory, but not limited thereto, in order to carry out operations of lighting and storage of recorded image.

The CPU microprocessor 113 is further connected to an additional function module 13. The additional function module 13 comprises: a sound effect module 131, which supplies a warning sound or an audio reminder, a wireless module 132, which is used with a handheld device or a wearable device to achieve a purpose of transmitting a reminder message or remote control, and a WIFI module 133, which is connected to the storage module 114 to detect the used capacity of the memory of the storage module 114 in order to receive an additional supply of an external space that is connectable through the Internet or an internally built-in memory of the WIFI module 133 to achieve video storage for an extended period of time. The additional function module 13 may be structured to increase or decrease the number of modules included therein according to the model of a specific product or the need of a user so as to achieve customization and to eliminate constraints of field wire laying. When the object gets outside a range of sensing, operations including lighting, video storage, and those of the additional function module 13 are shut down and put in a waiting condition for re-activation when a next object entering the range of sensing.

In the first embodiment, an advantage is saving of electrical power and storage space, for the storage space will be used to store recorded image only when determination is made by the image recognition device 112 that there is a moving object image in the range of sensing. This greatly reduces the waste of the storage space of the recorded image. Further, the additional function module 13 is additionally provided to provide the present invention with various functions for the purpose of customization.

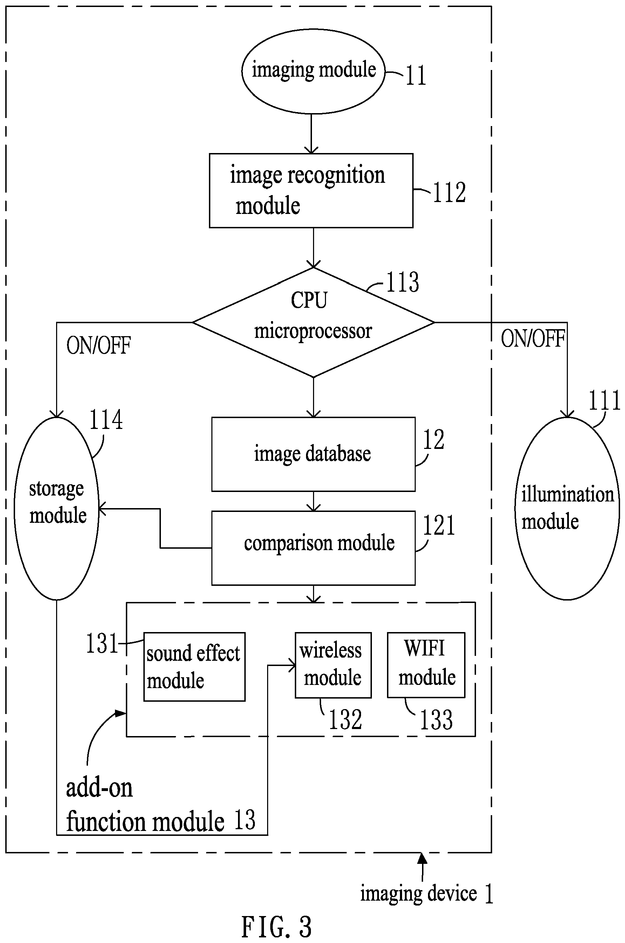

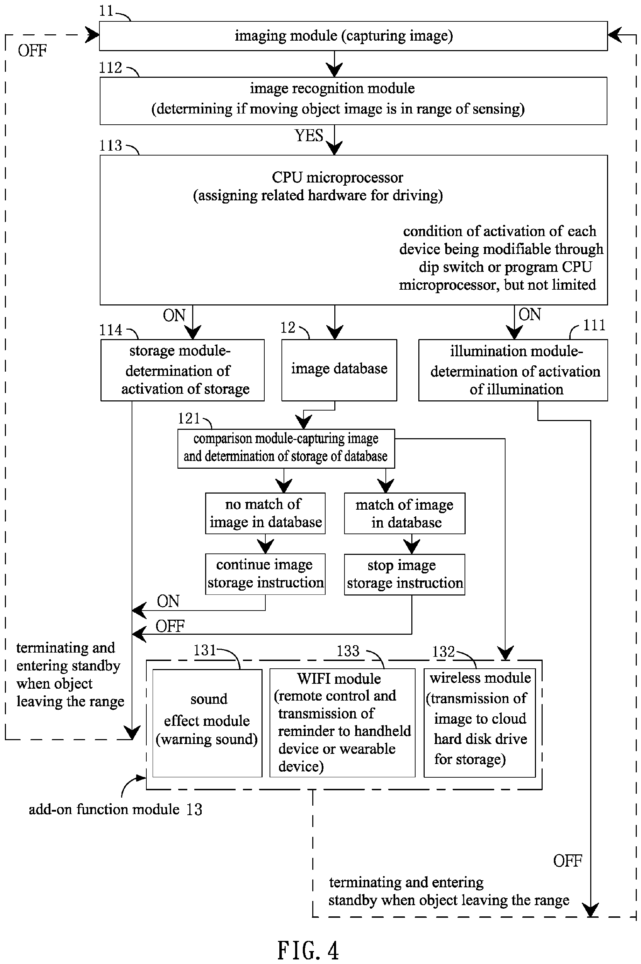

Further referring to FIGS. 3 and 4, which show a second embodiment, the second embodiment is structured by adding an image database 12 and a comparison module 121 to the structure of the first embodiment, wherein the image database 12 is connected to the CPU microprocessor 113 and the image database 12 is also connected to the comparison module 121, so that the CPU microprocessor 113, when receiving the signal discussed previously and activating the lighting module 111 and the storage module 114, also activates the image database 12, wherein the image database 12 is loaded in advance with images 14 for the purposes of determining if an object matches the previously loaded images 14, where the amount of images stored in not subjected to any specific limitations or constraints (and is generally determined according to the amount of memory provided), and receives an image 141 acquired by the image module 11, which is transmitted through the CPU microprocessor 113 to the comparison module 121 for determining, together with the image database 12 connected thereto, if there is a match with the previously-loaded images 14, so that image recoding and storage continue if there is no match of the images loaded in the image database 12, otherwise, upon identification of a match with the images loaded in the image database 12, a signal is transmitted to the storage module 114 to stop further storage of the recorded image, while the operation of the lighting module 111 is not affect and lighting remains. The comparison module 121 is further connected to an additional function module 13. The additional function module 13 may comprise: a sound effect module 131, which supplies a warning sound or an audio reminder, a wireless module 132, which is used with a handheld device or a wearable device to achieve a purpose of transmitting a reminder message or to effect remote control, and a WIFI module 133, which is connected to the storage module 114 to detect the used capacity of the memory of the storage module 114 in order to receive an additional supply of an external space that is connectable through the Internet or an internally built-in memory of the WIFI module 133 to achieve video storage for an extended period of time. The additional function module 13 may be structured to increase or decrease the number of modules included therein according to the model of a specific product or the need of a user so as to achieve customization and to eliminate constraints of field wire laying. When the object gets outside a range of sensing, operations including lighting, image recoding, and those of the additional function module 13 are shut down and put in a waiting condition for re-activation when a next object entering the range of sensing.

In the second embodiment, the image database 12 and the comparison module 121 are additionally included for the purposes of improving the conditions of recognition, where besides determining if an image detected by the image recognition device 112 is a moving object image, the image database 12 may be subjected to storage and removal of related images 14 therein so that in a subsequent operation of determination carried out in the comparison module in respect of an image, if it is an image 14 loaded in the image database 12, then it is determined that the image is a known person (such as a family member, a friend, and a relative) and video storage is stopped; and if it is an image 14 other than those of the image database 12, the video storage keeps on, whereby an effective use of the entirety of the storage space can be enhanced.

Referring to FIGS. 1-4, the two embodiments are both provided with the additional function module 13 and a major difference is regarding the driving signal, where in one of them, the driving is directly made with the CPU microprocessor 113, while in the other one, re-determination of an image must be made through the image database 12 and the comparison module 121 before driving is made so that comparison of image can only be performed with additional constraints to thereby achieve a purpose of accuracy of determination.

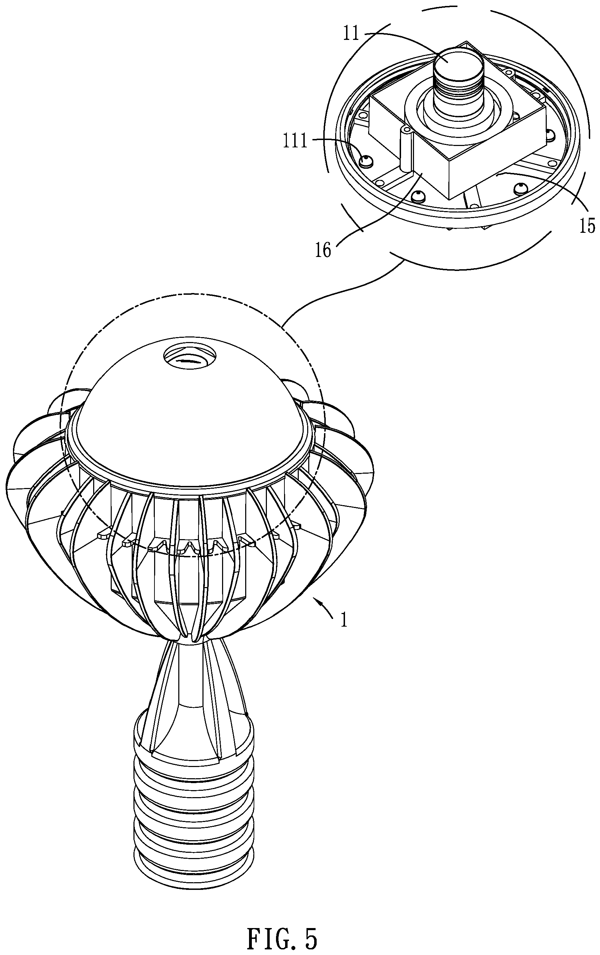

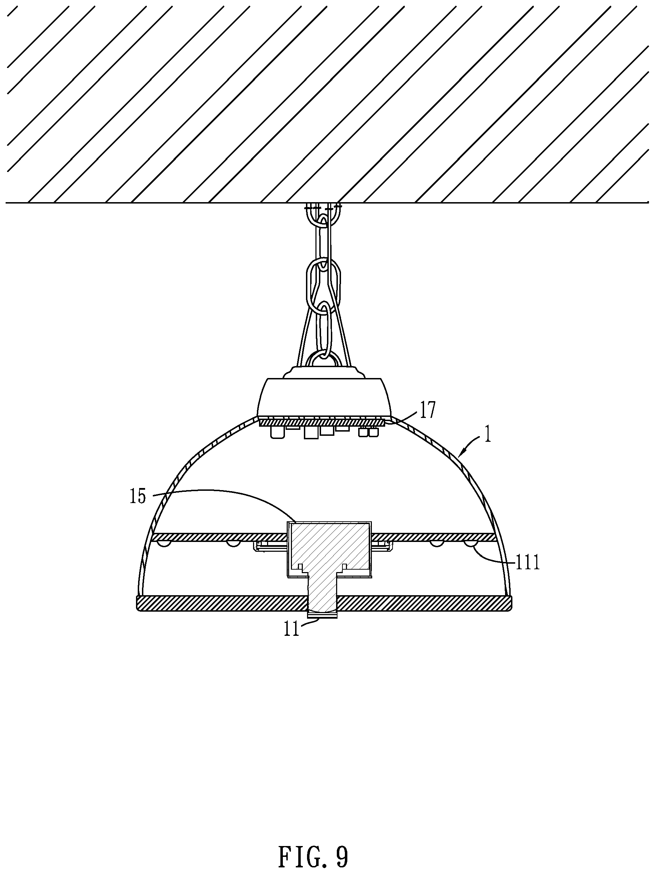

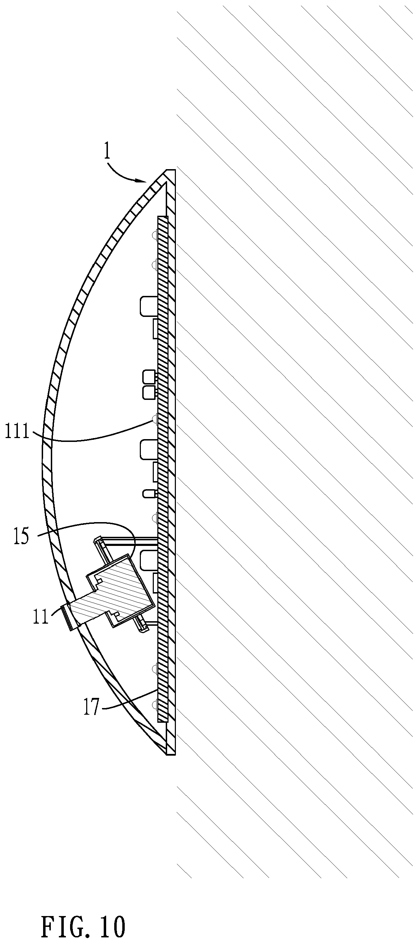

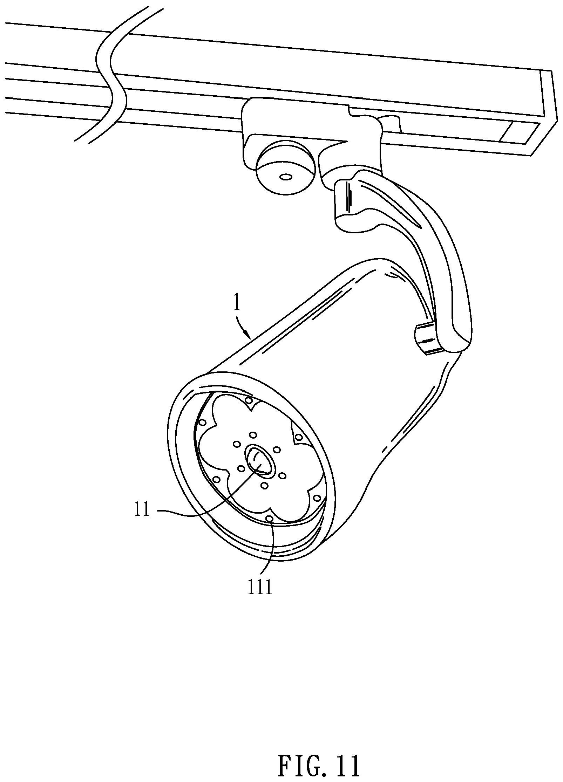

In the following example applications shown in FIGS. 5-12, a power supply board 17 is provided and is set at a position that is subjected to no specific constraint with a major function of supplying necessary electrical power. The circuit board 15, which was discussed previously, is generally arranged inside the image device 1 with a major function of being arranged with the related modules to carry out the process flows illustrated in the first embodiment or the second embodiment, so that a description in regard to the relative position and the use thereof is given in advance for easy reference and convenience of reading.

Referring to FIGS. 5-7, in each of which the image device is respectively embodied in the form of a regular light bulb, a fluorescent light tube, and a ceiling lighting fixture, FIG 5 shows an image device 1, which comprises a circuit board 15 therein. The outside is provided with a rotatable seat 16 for attaching to a power supply board 17. The circuit board 15 comprises chips of various functions mounted thereon and the circuit board 15 is connected to one or more than one lighting module 111. The specific lighting module 111 is a regular LED based light emission device. Coupling means of the lighting module 111 is the same as the measure adopted in the first and second embodiments to be separate from the image device 1. The rotatable seat 16 further comprises therein an image module 11 for video storage. Based on the contents of the flow chart of the first embodiment that is discussed previously, together with FIG 5, it can be easily appreciated that in the application to a regular light bulb, the image module first acquires an image and data is then transmitted to the circuit board 15, where the chips included in the circuit board 15 comprise the image module 11, the image recognition device 112, the CPU microprocessor 113, the storage module 114, and the additional function module 13 and the additional function module 13 further comprises: the sound effect module 131, the wireless module 132, and the WIFI module 133, so that the modularized arrangement allows for substitute and selection of the functions that are desired for use. The functions of these modules have been described previously. Further, the lighting module 111 may be installed in a different way, where the lighting module 111 is directly mounted to the circuit board 15 so as to achieve the purposes of reduction of the size and cost of the image device 111 or addition of further components.

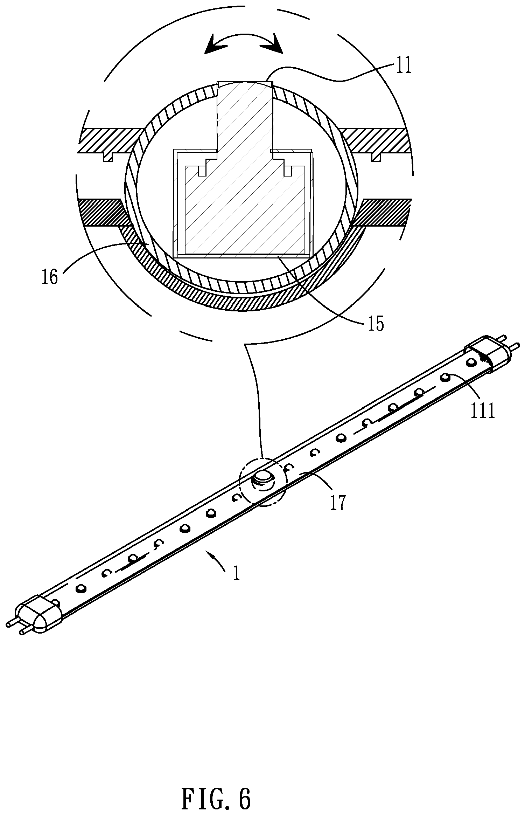

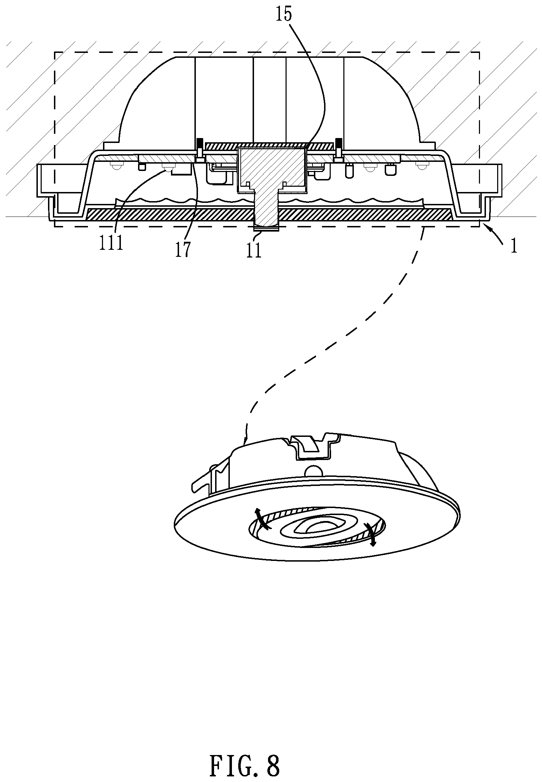

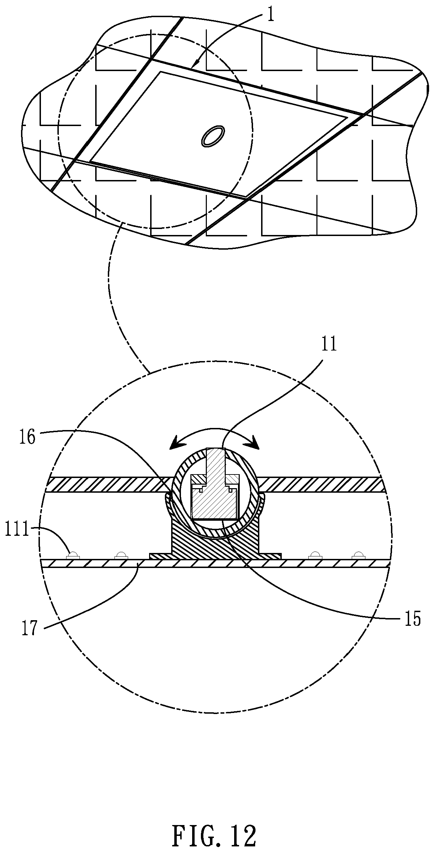

FIG 6 shows an example of a fluorescent light tube. In the fluorescent light tube, the rotatable seat 16 further provides a function of rotation in order to adjust the orientation of the image module 11 for the purposes of capturing images of different angles. FIGS. 8 and 12 respectively show an embedded light and an LED panel light, which further comprise the rotatable seat 16 used for rotation in the fluorescent light tube. The circuit board 15 further comprises an image database 12 and a comparison module 121. When an image captured by the image module 11 is transmitted through the image recognition device 112 to the CPU microprocessor 113 to have the lighting module 111 and the storage module 114 simultaneously activated, the CPU microprocessor 113 also transmits a signal to the image database 12, which, through determination made with the comparison module 121, issues a signal regarding if the storage module 114 stops a recording operation or maintains the recording operation. The storage module 114 is also connected with the additional function module 13 to carry out the contents of the flow chart discussed with reference to the second embodiment.

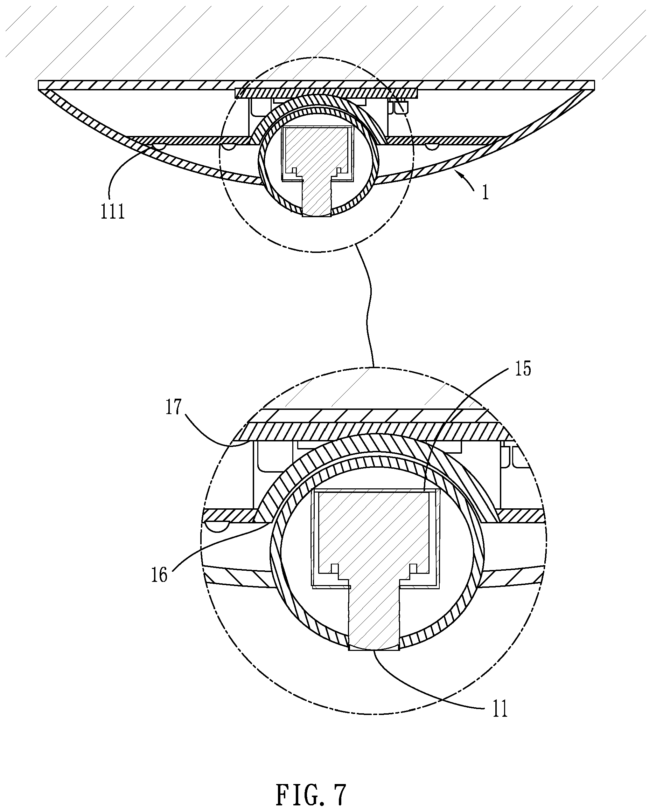

The structure and operation flow of the image module 11 as discussed previously is applicable to and used with various arrangements of the image device. For example, those illustrated in FIGS. 7 and 9-11 are respectively a ceiling lighting fixture, a pendant light, a wall lighting fixture, and a track light, but the present invention is not limited to the examples mentioned herein. Within the scope of understandability, it is appreciated that the image module 11 can be mounted to a rotatable seat 16 that does not allow for rotation to adjust orientation in order to enhance fixation of position or a rotatable seat 16 that allows for rotation for adjusting the orientation so that angle adjustment can be achieved with the rotatable seat 16, together with the image recognition device 112 that was discussed previously for recognition of image, for driving the lighting device 111, so that it can be further appreciated that the present invention generally uses image recognition to drive the lighting device 111.

For the practical applications mentioned herein, for one with no rotatable structure, the process flow discussed with reference to the first embodiment is recommended, where activation of related modules is achieved only with acquirement of image; and for one with a rotatable structure, the process flow discussed with reference to the second embodiment is recommended, where an image database 12 and a comparison module 121 are further included to allow for further image determination before activation of related modules is made, making the invention more widely applicable. However, in the entirety of the structure, the use of the ones with or without the rotatable structure does not have to follow the process flows discussed herein and alternatively, the process flow of the second embodiment may be applied to a no-rotation structure, but it is not possible to acquire images of different angles for the operations of the comparison module 121.

In summary, the present invention makes use of acquirement of image, which after being recognized, is used with the CPU microprocessor to drive the storage module and the lighting module, so that determination is upgraded to image recognition, instead of the conventional way of thermal sensing. Further, with data pre-loaded in the image database and recognition and determination made with the comparison module, the storage space for image recoding can be adjusted to the most effective use; and the additional function module is provided to increase or decrease the functions used or desired so as to suit the need of a user, making the present invention more flexible in the storage space of image recoding and the accuracy of recognition or determination of image is improved through multiple operations of image recognition.

## Claims

1. A lighting device controlled by an image recognition system, **characterized by** comprising:
an image device (1), which comprises therein an image module (11), which acquires an image; an image recognition device (12), which recognizes the image acquired by the image module (11) to transmit a signal to a CPU microprocessor (113), so that the CPU microprocessor (113) simultaneously activates a lighting module (111) and a storage module (114) connected thereto to carry out operations of lighting and video storage.

2. A lighting device controlled by an image recognition system, **characterized by** comprising:
an image device (1), which comprises therein an image module (11), which acquires an image; an image recognition device (112), which recognizes the image acquired by the image module (11) to transmit a signal to a CPU microprocessor (113), so that the CPU microprocessor (113) simultaneously activates a lighting module (111) and a storage module (114) connected thereto to carry out operations of lighting and video storage, the CPU microprocessor (113) being connected to an additional function module (13).

3. The lighting device controlled by the image recognition system according to claim 2, **characterized in that** the additional function module (13) further comprises: a sound effect module (131), which supplies a warning sound, a wireless module (132), which transmits a reminder, and a WIFI module (133), which transmits a stored image, each of the modules (131, 132, 133) being connected to and driven by the CPU microprocessor (113), the WIFI module (133) being connected to the storage module (114) for the storage module (114) to store of recorded images.

4. A lighting device controlled by an image recognition system, **characterized by** comprising:
an image device (1), which comprises therein an image module (11), which acquires an image; an image recognition device (112), which recognizes the image acquired by the image module (11) to transmit a signal to a CPU microprocessor (113), so that the CPU microprocessor (113) simultaneously activates a lighting module (111) and a storage module (114) connected thereto to carry out operations of lighting and video storage, the CPU microprocessor (113) being connected to an additional function module (13), wherein the additional function module (13) further comprises: a sound effect module (131), which supplies a warning sound, a wireless module (132), which transmits a reminder, and a WIFI module (133), which transmits a stored image, each of the modules (131, 132, 133) being connected to and driven by the CPU microprocessor (113), the WIFI module (133) being connected to the storage module (114) for the storage module (114) to store of recorded images; an image database (12), which is loaded therein at least one imageand in connected with the CPU microprocessor (113) for transmission of the captured image to a comparison module (121) for comparison, the comparison module (121) being further connected with the storage module (114) in order to control an operation condition of image recoding of the storage module (114).

5. The lighting device controlled by the image recognition system according to any one of claim 1, 2, or 4, **characterized by** further comprising: a rotatable seat (16), the rotatable seat (16) being arranged outside the image module (11), the rotatable seat (16) being fixed or adjustable to improve fixation of the image module (11) or to adjust the rotatable seat (16) to change a viewing range of the image module (11) in order to capture different images.
